# EUROPÄISCHE PATENTSCHRIFT

(11) **EP 2 543 419 B1**
(45) Veröffentlichungstag und Bekanntmachung des Hinweises auf die Patenterteilung: **01.02.2017**
(21) Anmeldenummer: 12174871.9
(22) Anmeldetag: 04.07.2012
(51) Int. Cl.: B01D 25/19, B01D 25/127

(54) **Filterpresse**
Filter press
Filtre-presse

(30) Priorität: 04.07.2011 DE 202011050628 U
(43) Veröffentlichungstag der Anmeldung: 09.01.2013
(73) Patentinhaber: Gölz GmbH, 53940 Hellenthal-Blumenthal (DE)
(72) Erfinder: Schulte, Herbert, 53879 Euskirchen (DE)
(74) Vertreter: Wagner Albiger & Partner Patentanwälte mbB

(56) Entgegenhaltungen:
- WO-A1-2006/106463
- WO-A1-2010/092612
- WO-A2-2008/114303
- DE-C1- 19 904 637

## Beschreibung

Die Erfindung betrifft eine Filterpresse, umfassend eine Kopfplatte und eine Endplatte, die mittels mindestens einer Zugstange unter Zwischenlage eines Pakets von Kammerplatten miteinander verbunden sind, wobei zwischen benachbarten Kammerplatten jeweils eine Filterkammer ausbildbar ist und eine Spannvorrichtung vorgesehen ist, mittels derer die Kammerplatten in eine Betriebsstellung bringbar sind, in welcher sie die Filterkammern abdichtend aneinandergepresst sind und in eine Öffnungsstellung freigebbar sind, in welcher die Filterkammern öffenbar sind und als Spannvorrichtung eine von einem Arbeitsfluid beaufschlagbare Druckeinheit vorgesehen ist.

Derartige Filterpressen sind beispielsweise aus der WO 2008/114303, WO 2010/092612 A1 und der DE 199 04 637 C1 bekannt und dienen dazu, Suspensionen, wie mit Feststoffen beladene Flüssigkeiten, z.B. Kühl- und Spülschlamm von Betonbohr- und Betonsägemaschinen in die Fest- und Flüssigfraktion aufzuteilen, damit das zur Kühlung bzw. Spülung verwendete Wasser von den Feststoffen befreit und z.B. in die Kanalisation abgeführt werden kann, während die Feststoffe zurückgehalten und einer Deponie oder dem Recycling zugeführt werden können.

Die bisher bekannten auch als Kammerfilterpressen bezeichneten Vorrichtungen bedienen sich für das Zusammenspannen der Kammerplatten Hydraulik- oder Pneumatikzylindern, zum Teil auch unter Einsatz von mechanisch aufwendigen Kniehebeln, um einerseits die für die Abdichtung der jeweils eine Filterkammer umschließenden Kammerplatten erforderliche Flächenpressung zu erreichen, andererseits aber in der Öffnungsstellung auch genügend Freiraum für das Öffnen der Filterkammern und das Entnehmen der sich darin ansammelnden Filterkuchen aus dem Feststoffmaterial zu gewährleisten. Die bekannten Vorrichtungen sind aus diesem Grunde nicht nur technisch aufwendig und damit kostenintensiv, sondern weisen auch eine unvorteilhafte Baugröße auf, die einen Transport und einer Aufstellung in beengten Räumlichkeiten, beispielsweise Kellerräumen oder -fluren und einen Transport über Treppenhäuser beschwerlich bis unmöglich macht.

Aufgabe der vorliegenden Erfindung ist es daher, die Nachteile des Standes der Technik zu überwinden und eine leistungsfähige aber besonders kompakt bauende Filterpresse vorzuschlagen, die beispielsweise auch in Räumen mit kleinen Türöffnungen vorzugsweise von nur einem Mann eingebracht werden kann und idealerweise auch in einem handelsüblichen Pkw transportiert werden kann.

Zur Lösung der gestellten Aufgabe wird erfindungsgemäß eine Ausgestaltung der Filterpresse gemäß den Merkmalen des Schutzanspruches 1 vorgeschlagen.

Vorteilhafte Ausgestaltungen und Weiterbildungen der Erfindung sind Gegenstand der abhängigen Ansprüche.

Die Erfindung schlägt vor, eine entfernbare Distanzplatte zwischen der Kopf- und Endplatte vorzusehen, wobei nach Entfernung der Distanzplatte ein ausreichender Bewegungsraum zwischen den Kammerplatten und der Druckeinheit zum Überführen der einzelnen Kammerplatten in die Öffnungsstellung zwecks Entnahme eines Filterkuchens aus der Filterkammer ausgebildet wird. Auf diese Weise wird eine hochkompakte Bauform geschaffen, deren Raumerfordernis im Wesentlichen vom Abstand zwischen Kopf- und Endplatte bestimmt wird, da sämtliche übrigen Funktionsteile, nämlich das Paket von Kammerplatten sowie die Spannvorrichtung in Gestalt der Druckeinheit und der entfernbaren Distanzplatte zwischen der Kopf- und Endplatte angeordnet werden.

Insbesondere ist es nach einem Vorschlag der Erfindung möglich, die Druckeinheit von einem mit Druckluft als Arbeitsfluid beaufschlagbaren Luftkissen zu bilden. Derartige Luftkissen erzeugen bei Beaufschlagung mit dem problemlos bereitstellbaren Arbeitsfluid Druckluft eine sehr hohe Flächenpressung auf die Kammerplatten, was für eine gute Abdichtung der zwischen diesen ausbildbaren Filterkammern erforderlich ist, jedoch nimmt die von einer solchen Druckeinheit ausübbare Druckkraft mit zunehmender Ausdehnung rasch ab, da sich die Auflagefläche des Luftkissens verkleinert. Durch die erfindungsgemäß vorgesehene Distanzplatte kann der für die Erzeugung der Presskraft in Schließstellung erforderliche Hub der Druckeinheit auf ein Minimum reduziert und die volle Hubkraft genutzt werden. Sollen die Kammerplatten in ihre Öffnungsstellung gebracht werden, würde der geringe Hub der erfindungsgemäß vorgesehenen Druckeinheit hierfür nicht ausreichen, weshalb die Erfindung vorschlägt, die Distanzplatte entfernbar zwischen der Kopf- und Endplatte vorzusehen, so dass nach Entfernung der Distanzplatte ein ausreichender Bewegungsraum zwischen den Kammerplatten und der Druckeinheit geschaffen wird, der ein problemloses Überführen der einzelnen Kammerplatten in die Öffnungsstellung zwecks Entnahme des Filterkuchens aus der Filterkammer ermöglicht.

Nach einem Vorschlag der Erfindung wird die Dicke der Distanzplatte so bemessen, dass sie mindestens dem Abstand zwischen der Öffnungs- und Betriebsstellung der Kammerplatten entspricht, um beim Entnehmen der Distanzplatte ausreichenden Bewegungsfreiraum zu erhalten.

Nach einem Vorschlag der Erfindung sind die Druckeinheit und die Distanzplatte benachbart zum Paket der Kammerplatten angeordnet.

Ferner wird vorgeschlagen, dass zwischen der Druckeinheit und der Distanzplatte eine Druckplatte vorgesehen ist, so dass sich weiter bevorzugt die Druckeinheit zwischen der Kopfplatte oder der Endplatte und der dazu benachbarten Druckplatte ausdehnen und zwischen diesen die gewünschte Druckkraft erzeugen kann.

Die Kammerplatten und die Distanzplatte sowie die Druckplatte sind an der mindestens einen Zugstange fixierbar, beispielsweise mittels vorstehender Haltearme an diesen einhängbar.

Die Distanzplatte kann nach einem Vorschlag der Erfindung einteilig ausgeführt sein oder aber auch alternativ mehrteilig, z.B. horizontal oder vertikal geteilt ausgeführt sein. Das Arbeitsfluid kann nach einem Vorschlag der Erfindung Druckluft sein, jedoch können auch andere Arbeitsfluide gewählt werden. Die Verwendung von Druckluft bietet überdies den Vorteil, dass die Druckluft auch für den Betrieb der Suspensionspumpe, die die zu filternde Suspension fördert, z.B. eine Druckluftmembranpumpe dienen kann.

Weitere Ausgestaltungen und Einzelheiten der Erfindung werden nachfolgend anhand der ein Ausführungsbeispiel darstellenden Zeichnung erläutert. Es zeigen:
- Figur 1: in perspektivischer Darstellung eine erfindungsgemäße Filterpresse,
- Figur 2: die Seitenansicht der Filterpresse gemäß Figur 1,
- Figur 3: den Schnitt durch die Filterpresse gemäß Figur 2 mit in Betriebsstellung befindlichen Kammerplatten,
- Figur 4: die Aufsicht auf die Filterpresse gemäß Figur 2,
- Figur 5: die Seitenansicht der Filterpresse gemäß Figur 2 mit entfernter Distanzplatte,
- Figur 6: die Entnahme eines Filterkuchens aus der Filterpresse gemäß Figur 5.

Aus den Figuren ist eine global mit 1 bezeichnete Filterpresse ersichtlich, die zu ihren beiden Enden von einer Kopfplatte 10 und einer Endplatte 15 begrenzt wird. Zwischen Kopfplatte 10 und Endplatte 15 sind nachfolgend noch näher erläuterte und zu einem Paket zusammengefasste Kammerplatten 11, eine Distanzplatte 12, eine Druckplatte 13 und eine als Spannvorrichtung dienende Druckeinheit 14 angeordnet. Die Kopfplatte 10 ist mit der Endplatte 15 über zwei durch entsprechende Bohrungen in Kopfplatte 10 und Endplatte 15 geführte Zugstangen 16 mittels aufgeschraubter Muttern 160 verbunden und die Kopf- und Endplatte 10, 15 sind relativ zueinander lagefixiert.

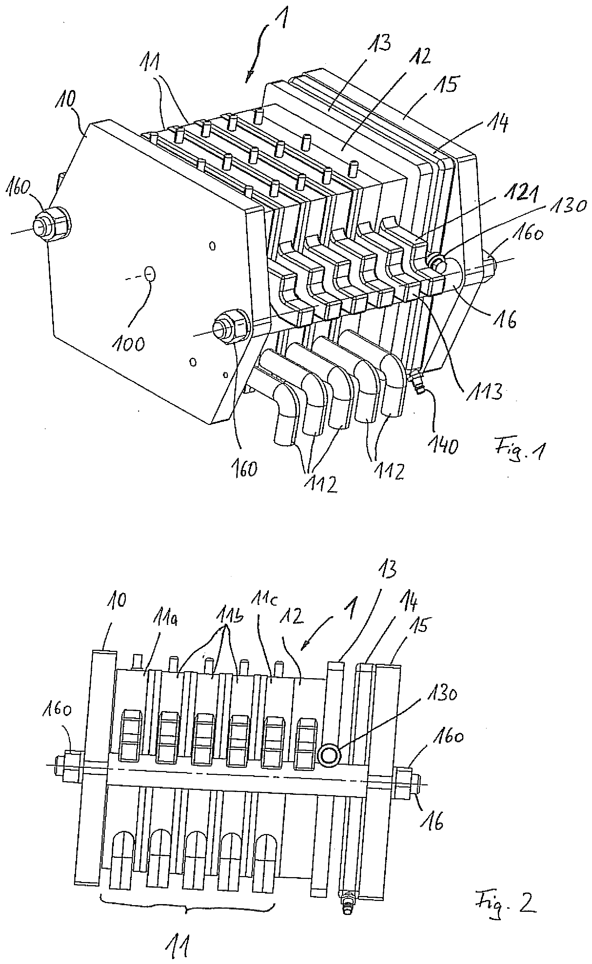

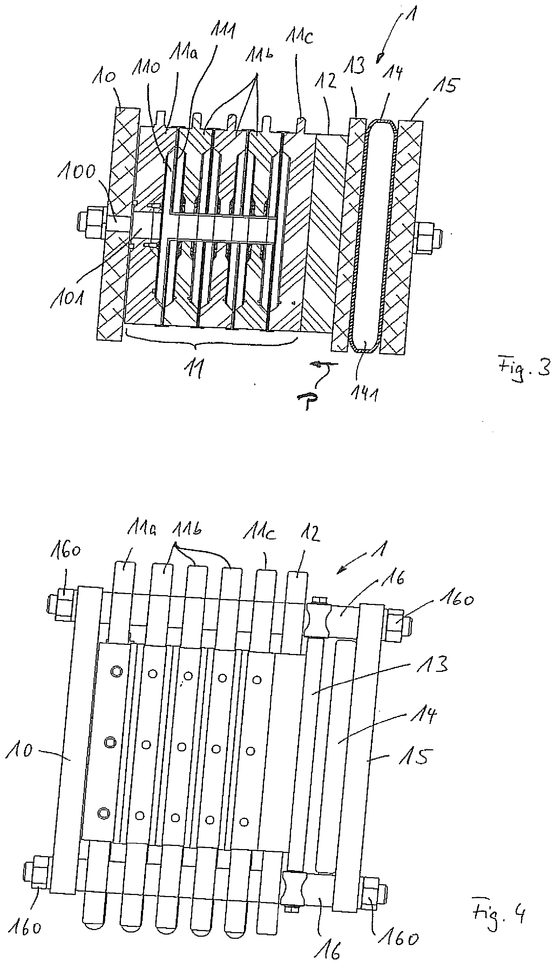

Die Kammerplatten 11 umfassen, wie insbesondere aus den Figuren 2 und 3 ersichtlich, benachbart zur Kopfplatte 10 zunächst eine mit 11 a bezeichnete Kammerkopfplatte, an die sich in Richtung auf die Endplatte 15 insgesamt drei Kammermittelplatten 11 b und sodann benachbart zur Distanzplatte 12 eine Kammerendplatte 11c anschließt. Zwischen der Kammerkopfplatte 11a und der benachbarten Kammermittelplatte 11b, den hieran anschließenden Kammermittelplatten 11 b sowie der dann folgenden Kammerendplatte 11c ist jeweils eine Filterkammer 110 ausbildbar, in die auch ein Filtertuch 111 aufgenommen ist.

Die Druckeinheit 14 wird von einem mit Druckluft als Arbeitsfluid beaufschlagbaren Luftkissen gebildet, wobei das Arbeitsfluid über einen Druckluftanschluss 140 in den Innenraum 141 der Druckeinheit 14 einleitbar bzw. aus diesem ableitbar ist.

In der Figur 3 ist die Druckeinheit in aufgeblähtem, d.h. mit dem Arbeitsfluid unter Druck beaufschlagten Zustand dargestellt, in welchem die Druckeinheit 14 sich an der Endplatte 15 abstützt und in Folge dessen gemäß Pfeil P einen Druck auf die Druckplatte 13 und von dort über die Distanzplatte 12 auf das Paket der vorangehend erläuterten Kammerplatten 11 ausübt, die ihrerseits an die Kopfplatte 10 gepresst werden. Infolge dieser Presskraft werden die einzelnen Kammerplatten 11a, 11 b, 11c mit der erforderlichen Flächenpressung aufeinandergepresst, so dass in solchen Schließstellungen die zwischen den Kammerplatten ausgebildeten Filterkammern 110 abgedichtet sind. Eine zu filternde Suspension kann dann über eine z.B. aus der Figur 1 und 3 ersichtliche zentrale Zulaufbohrung 100 in einen Zentralkanal 101 innerhalb des Pakets von Kammerplatten 11 eingeführt werden und die Flüssigkeit tritt nachfolgend aus seitlich angeordneten Ablaufstutzen 112 aus, während Feststoffe innerhalb der Filterkammern 110 zurückbleiben und allmählich einen Filterkuchen ausbilden.

Aus der Darstellung beispielsweise der Figuren 1 und 2 ist überdies ersichtlich, dass die Kammerplatten 11 mittels seitlich auskragender Haltearme 113 sich auf den Zugstangen 16 abstützen. Ebenso wird die Distanzplatte 12 mittels analog ausgeführter Haltearme 121 auf den Zugstangen 16 abgestützt.

Wenn im laufenden Betrieb der solchermaßen ausgebildeten Filterpresse die Filterkammern 110 allmählich mit zurückgehaltenen Feststoffmaterialien angefüllt sind, sich ein Filterkuchen ausgebildet und die Durchflussmenge an zu filternder Suspension entsprechend nachgelassen hat, wird ein Abreinigen der Filterkammern 110 erforderlich.

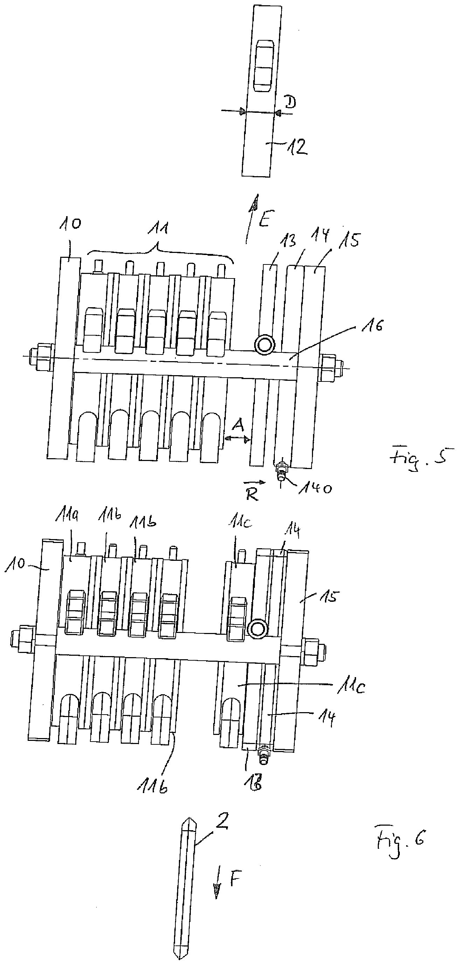

Zu diesem Zweck wird zunächst die Beaufschlagung der Druckeinheit 14 mit dem Arbeitsfluid unterbrochen, woraufhin dieses aus der in der Figur 3 dargestellten aufgeblähten Position entsprechend der Betriebsstellung der Kammerplatten 11 in eine entspannte Position zurückkehrt, die beispielsweise aus den Figuren 2 und 4 ersichtlich ist, bei der sich zwischen der Druckeinheit 14 und der Druckplatte 13 ein geringer Spalt ausbildet. Man erkennt, dass die Druckplatte 13 mittels Rollen 130 entlang der Längsachse der Zugstangen 16 verschieblich geführt ist, so dass diese gemäß Darstellung in der Figur 5 gemäß Pfeil R nach rechts in Richtung auf die entspannte Druckeinheit 14 verfahren werden kann. Nachfolgend kann gemäß Pfeil E die Distanzplatte 12 aus ihrer Position zwischen dem Paket der Kammerplatten 11 und der Druckplatte 13 entfernt werden, wobei die Druckplatte 12 in ihrer Dicke D so dimensioniert ist, dass sie mindestens dem Abstand A zwischen der Schließstellung der Kammerplatten 11 und einer Öffnungsstellung derselben entspricht, in welcher die Filterkammern 110 geöffnet und damit zugänglich sind.

Demzufolge kann nach dem Entnehmen der Distanzplatte 12, wie beispielsweise in Figur 6 dargestellt, die Kammerendplatte 11c gemeinsam mit der Druckplatte 13 bis zur gemeinsamen Anlage mit der Druckeinheit 14 an der Endplatte 15 nach rechts verschoben werden, so dass zur benachbarten Kammermittelplatte 11 b ein solcher Freiraum zugänglich wird, der die Entnahme des Filterkuchens 2 aus der zugehörigen Filterkammer gemäß Pfeil F in Figur 6 ermöglicht. Im Anschluss kann sodann der Kammerendplatte 11c benachbarte Kammermittelplatte 11b nach rechts bis zur Anlage an derselben verlagert werden, woraufhin die Filterkammer zwischen den beiden benachbarten Kammermittelplatten 11b zugänglich wird usw., bis letztendlich sämtliche Filterkammern zwischen den einzelnen Kammerplatten 11 von ihren Filterkuchen 2 befreit sind. Nach einer Rückverlagerung sämtlicher Kammerplatten 11 und dem erneuten Einsetzen der Distanzplatte 12 kann sodann die Druckeinheit 14 mit geringstem Arbeitshub wieder die erforderliche Flächenpressung auf die Kammerplatten 11 zur Abdichtung derselben ausüben und der Filtervorgang beginnt von Neuem.

Es ist offensichtlich, dass die vorangehend erläuterte Filterpresse mit geringstmöglichen Abmessungen auskommt, so dass sie platzsparend in einer von einer Person beweglichen, z.B. auf einem Fahrgestell montierten Einheit auch bei beengten Räumlichkeiten eingebracht und dort mit geringstem Aufwand in Betrieb genommen werden kann. Dies ermöglicht den Einsatz der Filterpresse auf nahezu beliebigen Baustellen, wobei zugleich aufgrund der geringen Abmessungen und des ebenfalls geringen Gewichts ein problemloser Transport in handelsüblichen Pkws ermöglicht ist.

## Patentansprüche

1. Filterpresse (1), umfassend eine Kopfplatte (10) und eine Endplatte (15), die mittels mindestens einer Zugstange (16) unter Zwischenlage eines Pakets von Kammerplatten (11) miteinander verbunden sind, wobei zwischen benachbarten Kammerplatten (11) jeweils eine Filterkammer (110) ausbildbar ist und eine Spannvorrichtung vorgesehen ist, mittels derer die Kammerplatten (11) in eine Betriebsstellung bringbar sind, in welcher die Filterkammern (110) abdichtend aneinandergepresst sind und in eine Öffnungsstellung freigebbar sind, in welcher die Filterkammern (110) öffenbar sind und als Spannvorrichtung eine von einem Arbeitsfluid beaufschlagbare Druckeinheit (14) vorgesehen ist, **dadurch gekennzeichnet, dass** eine entfernbare Distanzplatte (12) zwischen der Kopf- und Endplatte (10, 15) vorgesehen ist, wobei die Dicke (D) der Distanzplatte (12) so bemessen ist, dass sie mindestens dem Abstand (A) zwischen der Öffnungs- und Betriebsstellung der Kammerplatten (11) entspricht und zwischen der Druckeinheit (14) und der Distanzplatte (12) eine Druckplatte (13) angeordnet ist und die Druckeinheit (14) und die Distanzplatte (12) benachbart zum Paket der Kammerplatten (11) angeordnet sind und die Kammerplatten (11), die Distanzplatte (12) sowie die Druckplatte (13) an der mindestens einen Zugstange (16) fixierbar sind, und nach Entnahme der Distanzplatte (12) aus ihrer an der Zugstange (16) fixierten Position zwischen dem Paket von Kammerplatten (11) und der Druckplatte (13) ein ausreichender Bewegungsraum entlang der Längsachse der mindestens einen Zugstange (16) zwischen den Kammerplatten (11) und der Druckeinheit (14) zum Überführen der einzelnen Kammerplatten (11) in die Öffnungsstellung zwecks Entnahme eines Filterkuchens (2) aus der Filterkammer (110) ausgebildet wird.

2. Filterpresse (1) nach Anspruch 1 , **dadurch gekennzeichnet, dass** die Distanzplatte (12) ein- oder mehrteilig ausgebildet ist.

3. Filterpresse (1) nach einem der Ansprüche 1 oder 2, **dadurch gekennzeichnet, dass** die Druckeinheit (14) von einem mit Druckluft als Arbeitsfluid beaufschlagbaren Luftkissen gebildet ist.

## Claims

1. A filter press (1) comprising a head plate (10) and an end plate (15) connected to each other by at least one pull rod (16) with a packet of chamber plates (11) being interposed therebetween, wherein, between adjacent chamber plates (11), one filter chamber (110), respectively, can be formed and a clamping device is provided by means of which the chamber plates (11) can be brought into an operating position in which the filter chambers (110) are pressed against one another in a sealing manner and can be released into an open position in which the filter chambers (110) can be opened, and a pressing unit (14) to which a working fluid can be applied is provided as a clamping device, **characterized in that** a removable spacer plate (12) is provided between the head and the end plate (10, 15), wherein the thickness (D) of the spacer plate (12) is dimensioned such that it corresponds at least to the distance (A) between the opening and the operating position of the chamber plates (11), and a pressing plate (13) is disposed between the pressing unit (14) and the spacer plate (12), and the pressing unit (14) and the spacer plate (12) are disposed adjacent to the packet of the chamber plates (11), and the chamber plates (11), the spacer plate (12) and the pressing plate (13) can be fixed to the at least one pull rod (16), and, after the removal of the spacer plate (12) from its position fixed on the pull rod (16) between the packet of chamber plates (11) and the pressing plate (13), a sufficient movement space is formed along the longitudinal axis of the at least one pull rod (16) between the chamber plates (11) and the pressing unit (14) for transferring the individual chamber plates (11) into the opening position for the purpose of removing a filter cake (2) from the filter chamber (110).

2. The filter press (1) according to claim 1, **characterized in that** the spacer plate (12) is formed in one or several parts.

3. The filter press (1) according to any one of the claims 1 or 2, **characterized in that** the pressing unit (14) is formed by an air cushion to which compressed air can be applied as a working fluid.

## Revendications

1. Filtre-presse (1), comprenant une plaque de tête (10) et une plaque d'extrémité (15) qui sont reliées ensemble au moyen d'au moins une barre de traction (16) avec un paquet intercalé de plateaux (11), une chambre de filtration (110) pouvant être conçue à chaque fois entre des plateaux (11) voisins et un dispositif de serrage étant prévu, dispositif de serrage au moyen duquel les plateaux (11) peuvent être amenés dans une position de travail dans laquelle les chambres de filtration (110) sont pressées les unes contre les autres de manière à assurer l'étanchéité et peuvent être dégagées dans une position ouverte dans laquelle les chambres de filtration (110) peuvent être ouvertes, et une unité de pression (14) qui peut être alimentée par un fluide de travail étant prévue comme dispositif de serrage,
**caractérisé en ce qu**'une plaque d'écartement (12) pouvant être retirée est prévue entre les plaques de tête et d'extrémité (10, 15), l'épaisseur (D) de la plaque d'écartement (12) étant dimensionnée de telle sorte qu'elle correspond au moins à la distance (A) entre la position ouverte et la position de travail des plateaux (11) et une plaque de pression (13) étant agencée entre l'unité de pression (14) et la plaque d'écartement (12) et l'unité de pression (14) et la plaque d'écartement (12) étant agencées voisines du paquet des plateaux (11), les plateaux (11), la plaque d'écartement (12) ainsi que la plaque de pression (13) pouvant être fixées à l'au moins une barre de traction (16) et, après retrait de la plaque d'écartement (12) hors de sa position fixée à la barre de traction (16) entre le paquet de plateaux (11) et la plaque de pression (13), un espace de déplacement suffisant étant conçu le long de l'axe longitudinal de l'au moins une barre de traction (16) entre les plateaux (11) et l'unité de pression (14) pour faire passer les plateaux individuels (11) dans la position ouverte afin d'enlever un gâteau de filtre-presse (2) hors des chambres de filtration (110).

2. Filtre-presse (1) selon la revendication 1, **caractérisé en ce que** la plaque d'écartement (12) est conçue en une seule partie ou en plusieurs parties.

3. Filtre-presse (1) selon l'une des revendications 1 ou 2, **caractérisé en ce que** l'unité de pression (14) est formée par un coussin d'air pouvant être alimenté par de l'air comprimé comme fluide de travail.
